Europäisches Patentamt

European Patent Office

Office européen des brevets

(11) Publication number: **0 357 331**
A2

(12) **EUROPEAN PATENT APPLICATION**

(21) Application number: **89308550.6**

(22) Date of filing: **23.08.89**

(51) Int. Cl.⁵: **H 05 B 6/64**

(30) Priority: **26.08.88 GB 8820307**

(43) Date of publication of application:
**07.03.90 Bulletin 90/10**

(84) Designated Contracting States: **DE ES FR GB**

(71) Applicant: **COURTAULDS FILMS & PACKAGING (HOLDINGS) LTD.**
**Bath Road**
**Bridgwater Somerset TA6 4PA (GB)**

(72) Inventor: **Hartshorn, William Ian Stanley**
**Rannoch Orchard Close**
**Cossington Bridgwater Somerset (GB)**

**Cunningham, John**
**80 Broadway Chilton Polden**
**Bridgwater Somerset (GB)**

**Blake, Martin Charles**
**2 Tulip Tree Road**
**Bridgwater Somerset (GB)**

(74) Representative: **Claisse, John Anthony, Dr.**
**Courtaulds Films & Packaging (Holdings) Ltd Bath Road**
**Bridgwater Somerset TA6 4PA (GB)**

(54) **Containers.**

(57) A heat sealable, transparent, rigid, thermoformed, microwaveable container for a foodstuff, the container comprising a thermoformed polymeric sheet having a core layer of an oxygen barrier polymer with a layer of a polyolefin on one side and a layer of rigidity imparting polymer on the other side, the rigidity imparting polymer being capable of substantially withstanding the temperature conditions required for microwaving the foodstuff. Foodstuffs can be stored for prolonged periods in a modified atmosphere by sealing them in containers of the invention with a suitable barrier. The foodstuffs can then be heated by microwaves after removal of the barrier seal and without the need for a further container

EP 0 357 331 A2

Bundesdruckerei Berlin

## Description

### CONTAINERS

This invention concerns containers for foodstuffs, and in particular containers in which foodstuffs can be packaged and stored, and subsequently heated by microwave radiation.

The heating of foodstuffs by microwave radiation provides a particularly convenient and rapid method of either re-heating a pre-cooked foodstuff so that it can be eaten hot, or of even cooking raw food. This has led to the widespread sale of "convenience" foods, small portions, for example single servings, being packaged for re-heating or cooking in a microwave oven.

Various types of packaging are used for convenience foods, the method of preserving the food before consumption determining the particular type of packaging which is used. Thus the increasing demand for fresh, unfrozen food without preservatives has led to the development of packaging materials which allow the food to be seen through the package whilst maintaining conditions within the package which prevent the growth of microorganisms. Polymers having oxygen barrier properties are used for the purpose, the interior of the package being flushed with an inert gas, usually carbon dioxide, before sealing. However, currently proposed polymeric packaging materials having good oxygen barrier properties suffer from the disadvantage of being unable to withstand the temperatures involved in heating the food in a microwave oven, particularly if the materials are transparent. The requirement for a polymeric material to have oxygen barrier properties combined with microwaveability and transparency have therefore been seen to be mutually exclusive.

According to the present invention there is provided a heat sealable, transparent, rigid, thermoformed, microwaveable container for a foodstuff, the container comprising a thermoformed polymeric sheet having a core layer of an oxygen barrier polymer with a layer of a polyolefin on one side and a layer of rigidity imparting polymer on the other side, the rigidity imparting polymer being capable of substantially withstanding the temperature conditions required for microwaving the foodstuff.

When used to store a foodstuff, for example in a supermarket cooling cabinet, containers of the present invention will be sealed with a sealing member to provide a package having an atmosphere therein which prolongs the shelf life of the packaged foodstuff, the oxygen barrier layer of the thermoformed polymer sheet providing this for the container itself.

The rigidity imparting polymer used for containers of the present invention should be selected to provide the polymeric sheet with sufficient rigidity that the containers can be stacked during storage. As will be appreciated, the degree of rigidity required will depend on the number of containers to be stacked, their size and the weight of food which is to be placed in the containers. Both the chemical nature and the thickness of the layer of the rigidity imparting polymer together with the shape of the container will determine the rigidity of the resultant container. Examples of polymers which can be used for the rigidity imparting layer, being thermoformable and having the required temperature resistance during microwaving of containers made therefrom, include polycarbonates and poly-(methylpentene). The layer of rigidity imparting polymer will usually represent from 15 to 30%, preferably about 25% of the total thickness of the polymer sheet before thermoforming. Adequate rigidity can in general be achieved with such layers being from 50 to 120 microns thick, preferably about 90 microns thick, but thicker or thinner layers can be used, as desired.

The oxygen barrier layer of containers of the present invention is preferably a layer of an ethylene/ vinyl alcohol copolymer. The thickness of the layer should be such as to provide the desired degree of oxygen barrier, particularly once the sheet has been thermoformed. Sheets having layers of ethylene/ vinyl alcohol copolymers from 10 to 25 microns thick before thermoforming have provided satisfactory oxygen barrier properties for the storage of fresh meat products even after thermoforming of the sheets.

The polyolefin layer is preferably selected to impart at least a certain degree of rigidity to the container. Polyolefin layers can also be used to provide the containers with heat sealability for sealing the desired atmosphere within the containers with the foodstuff present. In general, the polyolefins will be selected from one or more polymers containing units derived from at least one of ethylene, propylene and but-l-ene, optionally also including units from at least one higher homologue, e.g. hex-l-ene or oct-l-ene. Examples of polyolefins which can be used include polyproplyene, optionally blended with an alkene copolymer. If the polyolefin layer does not provide adequate heat seal properties, a further heat seal layer can be applied to the polyolefin layer. If a further heat seal layer is used, it can be selected from materials known in the art, for example copolymers of two or more of the above olefins.

The thickness of the polyolefin layer is in general of lesser importance than that of the rigidity imparting and oxygen barrier layers since its main function is usually to provide a heat sealable surface. However, since the cost of the polymer of the other layers generally higher than that of the polyolefin layer.

The overall thickness of the polymeric sheet used to form containers of the present invention can be as desired, but it will usually be from 150 to 450 microns, for example about 350 microns. If the sheets are too thin they will be insufficiently rigid, and very thick sheets will be uneconomic.

The polymer sheet used to produce containers of the present invention can be conveniently formed by coextrusion of the various polymers with an adhesive tie layer between each. Thereafter, the sheet is subjected to thermoforming into the desired shape. Known methods can be used to effect the thermoforming.

Thermoforming is a particularly preferred method of shaping polymeric sheets since it can be used to produce a wide variety of shapes of container at low cost. A typical shape for containers of the present invention is as a tray with raised edges and a surface to which a suitable oxygen barrier film can be heat sealed. However, various other shapes can also be formed.

A particularly preferred embodiment of container in accordance with the present invention is produced by thermoforming a polymeric sheet consisting of a core of an ethylene/vinyl alcohol copolymer (e.g. about 20 microns thick) with a rigidity imparting layer of a polycarbonate (e.g. about 90 microns thick) on one side, preferably as supplied by General Electric Co. under the Trade Mark Lexan", and a layer of polyethylene on the other side, the layers being adhered to each other by a coextruded conventional tie layer adhesive. The total thickness of the sheet being, for example about 350 microns.

Containers in accordance with the invention have shown dimensional stability at temperatures of up to 110°C even with a rigidity imparting layer of a polycarbonate which forms as little as 15% of the total thickness of the sheet and despite the fact that polyethylene usually softens at about this temperature. Such sheets can in general be thermoformed satisfactorily over an unexpectedly wide temperature range, typically from 120 to 200°C, even though polyethylene melts at about 120°C and ethylene/ vinyl alcohol copolymers melt at about 160°C. Excellent clarity has been observed with such sheets after thermoforming, despite the very different types of polymers which are used and in particular the differences in refractive indexes of the polymers.

Once thermoforming has been effected, the containers can be filled with the foodstuff to be packaged, and a sealing member sealed over the container after the atmosphere within the container has been flushed with a gas to aid storage of the foodstuff. Gas flushing and sealing can be effected in known manner.

As with the container itself, the sealing member should be transparent and provide an oxygen barrier so that the sealed container provides an atmosphere therein which prolongs the shelf life of the packaged foodstuff. However, it is particularly preferred that the sealing member is also microwaveable. The material used to form the sealing member can therefore be of a hitherto proposed multi-layer film which is transparent and provides an oxygen barrier but which cannot withstand microwaving of the packaged foodstuff. However, preferred closure members consist of a layer of polymer of the type proposed for the container but not necessarily identical thereto. In general, the closure member will be thinner than the container since it will not usually need to be as rigid as the container itself. However, it may, if desired, be thicker or the same thickness as the container.

The sealing member is preferably peelable from the container to provide easy opening of sealed containers before they and their contents are heated by microwave energy. This can also facilitate heating of foodstuffs in the containers, it usually being preferred to have foodstuffs at least partially covered during heating by microwave energy.

## Claims

1. A heat sealable, transparent, rigid, thermoformed, microwaveable container for a foodstuff, the container comprising a thermoformed polymeric sheet having a core layer of an oxygen barrier polymer with a layer of a polyolefin on one side and a layer of rigidity imparting polymer on the other side, the rigidity imparting polymer being capable of substantially withstanding the temperature conditions required for microwaving the foodstuff.

2. A container according to claim 1, wherein the polyolefin comprises at least one polymer comprising units derived from at least one of ethylene, propylene and but-l-ene, and optionally including units derived from at least one higher homologue.

3. A container according to any of the preceding claims, wherein the core layer comprises an ethylene/vinyl alcohol copolymer.

4. A container according to any of the preceding claims wherein the rigidity imparting polymer comprises a polycarbonate or poly(methylpentene).

5. A container according to any of the preceding claims, wherein the layer of rigidity imparting polymer is from 50 to 120 microns thick.

6. A container according to any of the preceding claims, wherein the oxygen barrier layer is from 10 to 25 microns thick before thermoforming.

7. A container according to any of the preceding claims, having a transparent sealing member with oxygen barreir properties sealed thereto.

8. A container according to claim 7, wherein the sealing member is of a polymeric sheet as defined in claim 1 for the container itself.

9. A container according to claim 7 or claim 8, wherein the sealing member is peelable from the container.

10. A container according to any of the preceding claims, having a foodstuff sealed therein.